Europäisches Patentamt

European Patent Office

Office européen des brevets

(11) Veröffentlichungsnummer: **0 316 615 B1**

# EUROPÄISCHE PATENTSCHRIFT

(45) Veröffentlichungstag der Patentschrift: **22.09.93**

(51) Int. Cl.5: **G11B 11/10**, G11B 5/64

(21) Anmeldenummer: **88117653.1**

(22) Anmeldetag: **24.10.88**

(54) **Amorphes magnetooptisches Aufzeichnungsmaterial.**

(30) Priorität: **30.10.87 US 114978**

(43) Veröffentlichungstag der Anmeldung:
**24.05.89 Patentblatt 89/21**

(45) Bekanntmachung des Hinweises auf die Patenterteilung:
**22.09.93 Patentblatt 93/38**

(84) Benannte Vertragsstaaten:
**DE FR GB**

(56) Entgegenhaltungen:
**WO-A-86/07651**
**GB-A- 2 175 160**

**PATENT ABSTRACTS OF JAPAN, Band 10, Nr. 300 (P-506)[2356], 14 Okfober 1986&NUM;**

**PATENT ABSTRACTS OF JAPAN, Band 12, Nr. 233 (P-724)[3080], 05 Juli 1988&NUM;**

(73) Patentinhaber: **HOECHST AKTIENGESELL-SCHAFT**

**D-65926 Frankfurt(DE)**

(72) Erfinder: **Muchnik, Boris J.**
**4391 Pali Way**
**Boulder, CO 80301(US)**

EP 0 316 615 B1

Rank Xerox (UK) Business Services
(3.10/3.6/3.3.1)

## Beschreibung

Die Erfindung betrifft ein amorphes magnetooptisches Aufzeichnungsmaterial mit einer leicht zu magnetisierenden Achse senkrecht zur Materialoberfläche, aus einer Seltenerd-Übergangsmetall-Legierung mit Fe, Co und zumindest einem Element aus der Gruppe Gd, Tb sowie einem weiteren Metall.

Die magnetooptische Aufzeichnungstechnologie kombiniert die Vorteile der hohen Speicherdichte der optischen Aufzeichnung mit der Löschbarkeit der herkömmlichen Magnetplattenaufzeichnung auf einem austauschbaren Medium. Die Informationsaufzeichnung auf einem derartigen Aufzeichnungsfilm wird dadurch bewirkt, daß ein modulierter Laserstrahl auf die Oberfläche des Films gerichtet wird, wobei die Laserenergie ausreichend ist, um den Film lokal bis zur Curie-Temperatur oder bis zur Kompensationstemperatur des Films aufzuheizen, so daß die Richtung der Magnetisierung des Films an der betreffenden Stelle umgeschaltet wird, d.h. ihre Richtung um 180° ändert. Unter Nutzung des Kerr- oder Faraday-Effekts wird dann die Information an gewünschten Stellen des Speichermediums ausgelesen. Dies geschieht in der Weise, daß ein Lichtstrahl mit einer bestimmten Polarisation entweder die betreffende Stelle passiert oder durch das Speichermedium abgeblockt wird, abhängig von der Magnetisierung des Speichermediums an dieser betreffenden Stelle, an der der Lichtstrahl auf das Speichermedium auftrifft.

Aus der GB-A - 2.175.160 ist ein amorphes magnetooptisches Aufzeichnungsmaterial der eingangs beschriebenen Art bekannt, mit einem Seltenerd-Metall-Anteil gleich/größer 15 Atomprozent und kleiner/gleich 35 Atomprozent. Um einen hohen Widerstand gegen Sauerstoff und dennoch einen ausreichend großen Kerr-Drehwinkel von mindestens 0,15° zu erhalten, muß der Edelmetall-Anteil, beispielsweise Platin-Anteil, an der Seltenerd-Übergangsmetall-Legierung 10 Atomprozent betragen. Beträgt bei einer in diesem Dokument beschriebenen binären TbFe-Legierung der Platin-Anteil 3 bis 5 Atomprozent, so reicht dieser Anteil nicht aus, um eine Oxidation der Aufzeichnungsschicht zu verhinder. Erst ab einem Pt-Anteil von 8 und mehr Atomprozent wird die binäre magnetooptische Aufzeichnungsschicht TbFe ausreichend gegen Korrosion geschützt.

In den letzten fünfzehn Jahren wurde das Hauptaugenmerk bei der magnetooptischen Aufzeichnung auf die Verwendung von Seltenerden-Übergangsmetall-Legierungen (RETM) gerichtet, wobei es sich um Legierungen aus Gadolinium oder Terbium mit Eisen, Kobalt oder Nickel handelt, aufbauend auf die US-Basispatente 3,949,387 und 3,965,463, in denen beschrieben ist, daß derartige Aufzeichnungsmaterialien als relativ stabile amorphe Filmschichten auf herkömmlichen Substraten aufgebracht werden können und daß diese Materialien eine senkrechte Anisotropie besitzen, d.h. daß sie eine Vorzugsachse der Magnetisierung senkrecht zu der Filmoberfläche aufweisen. Diese amorphen Filmschichten sind vorteilhaft für die magnetooptische Aufzeichnung, da sie das Rauschen polykristalliner Gittergefüge nicht besitzen, sie können darüberhinaus auf alle möglichen Arten von Substraten bzw. Trägern aufgebracht werden und können so eingestellt werden, daß sie einen weiten Bereich von Zusammensetzungen abdecken.

Die Verwendung derartiger Materialien ist beispielsweise in der DE-A1 33 09 483 beschrieben. Es zeigte sich jedoch, daß eine der Beschränkungen der magnetooptischen Medien, die auf den voranstehend erwähnten RETM-Legierungen aufbauen, ihre begrenzte Umweltstabilität ist. Einen signifikanten Abbaumechanismus stellt die Oxidation der magnetooptischen Aktivschicht dar. Die Seltenen Erden neigen insbesondere zur Oxidation.

In der Literaturstelle "Technical Digest", Topical Meeting on Optical Data Storage, 11.-17. März 1987, Seiten 123 bis 126, Verfasser: Okada et al., ist die Verwendung einer Schutzschicht zum Verhindern einer derartigen Oxidation beschrieben. Desweiteren ist in der Literaturstelle "SPIE Proceedings", Vol. 382, Optical Data Storage, 17.-20. Januar 1983, Verfasser: Terao et al. das Hinzufügen von Selen zu optischen Aufzeichnungsfilmen aus Tellur oder Wismuth offenbart. Der Einfluß von Selen auf die Filme war unbestimmt, da es zwar den Widerstand von Tellurfilmen gegen Oxidation verbesserte, nicht jedoch diesen Widerstand von Wismuthfilmen. Die Erhöhung des Widerstands gegen Oxidation bei Tellurfilmen war jedoch durch ein ansteigendes Rauschen und Rissigwerden des Films begleitet.

In der Literaturstelle "IEEE Transactions on Magnetics" Vol. MAG-21, Nr. 5, September 1985, Verfasser: Imamura et al., ist das Hinzufügen von 8 % Platin zu TbFe-Filmen beschrieben, um den Widerstand gegen Oxidation zu verstärken, aufbauend auf der Theorie, daß Platin dazu neigt, eine stabile Passivierung zu bilden, die eine Oxidation verhindert. Unter dem Begriff Passivierung ist zu verstehen, daß die Oberfläche zum Schutz gegen Korrosion unangreifbar gemacht wird. In dieser Literaturstelle sind keinerlei Angaben gemacht, wie die Erhöhung des Widerstands gegen Oxidation durch das Hinzufügen von 8 % Platin ohne schwerwiegende Störung in den Wiedergabeeigenschaften des Aufzeichnungsmaterials, wie beispielsweise dem Rausch-Signal-Verhältnis, erreicht werden kann. Das Hinzufügen von 8 % Platin zu TbFe-Filmen beeinflußt nachteilig die Koerzitivkraft des Aufzeichnungsfilms und das Rausch-Signal-Verhältnis. In der voranstehend genannten Literaturstelle wird auch die Vermutung ausgesprochen, daß durch das Hinzufügen von Platin zu TbFeCo-Aufzeichnungsmaterialien bessere Ergebnisse erreicht werden können, da derartige ternäre Legierungen ein leicht höheres Signal-Rausch-Verhältnis besitzen als TbFe-Aufzeichnungsmaterialien, jedoch werden keinerlei Angaben in bezug auf die Zusammensetzung von derartigen TbFeCo-Aufzeichnungsmaterialien gemacht.

Aufgabe der Erfindung ist es, ein magnetooptisches Aufzeichnungsmaterial mit verbesserter Umweltstabilität der Seltenerd-Übergangsmetall-Legierungen, die in magnetooptischen Aufzeichnungsmedien eingesetzt werden, zu schaffen, ohne die magnetischen und sonstigen physikalischen Eigenschaften des Aufzeichnungsmaterials nachteilig zu beeinflussen.

Diese Aufgabe wird erfindungsgemäß dadurch gelöst, daß die Seltenerd-Übergangsmetall-Legierung die Zusammensetzung

$$((Tb\ Gd)_x\ Fe_{100-x-y}\ Co_y)_{100-a}\ Pt_a$$

für das weitere Metall Platin und

$$((Tb\ Gd)_x\ Fe_{100-x-y}\ Co_y)_{100-b}\ Se_b$$

für das weitere Metall Selen aufweist, mit $0,7 \leq a \leq 3$, $1 \leq b \leq 5$, $22 \leq x \leq 27$ und $6 \leq y \leq 10$.

Die weitere Ausgestaltung der Erfindung ergibt sich aus den Merkmalen der Ansprüche 2 bis 10.

In weiterer Ausgestaltung der Erfindung ist eine Schutzschicht, beispielsweise aus Siliziumnitrid, an jeder Seite des Aufzeichnungsmaterials aus einer Seltenerd-Übergangsmetall-Legierung angeordnet. Die beiden Siliziumnitridschichten besitzen zweckmäßigerweise gleiche Dicke.

Die Erfindung wird im folgenden anhand von einigen Ausführungsbeispielen beschrieben, die der Erläuterung dienen und auf die jedoch die Erfindung keineswegs beschränkt ist.

Es gibt z.Zt. keine Theorie, mit der die Verbesserung der Umweltstabilität bzw. die Erhöhung des Widerstandes gegen Umwelteinflüsse durch Zugabe von Platin oder Seien zu Seltenerd-Übergangsmetall-Legierungen erklärt werden könnte. Es zeigt sich, daß bestimmte Prozentanteile von Platin und/oder Selen den RETM-Legierungen hinzugefügt werden können, um deren Stabilitätseigenschaften zu verstärken, ohne daß es zu nachteiligen Beeinflussungen der erwünschten Eigenschaften für die Aufzeichnungsmedien kommt, wenn bestimmte Änderungen in der Zusammensetzung der Seltenerd-Übergangsmetall-Legierungen vorgenommen werden. Es werden vor allem RETM-Legierungen, wie TbFeCo, GdFeCo und TbGdFeCo, als Basismaterialien verwendet. Es könnten bis zu 5 % Platin diesen Basismaterialien hinzugefügt werden, wobei es jedoch auch in einigen Fällen ab Anteilen von 3 % Platin zu geringen Verlusten in den erwünschten Eigenschaften für die Aufzeichnung kommen kann. Aus diesem Grunde wird bevorzugt ein Platinanteil im Bereich von 1 bis 3 Atomprozent angestrebt.

Den Legierungen können im Falle von Selen bis zu 10 Atomprozent Selen hinzugefügt werden, jedoch liegt der Selenanteil eher bei 5 Atomprozent oder 3 Atomprozent und darunter. Bei charakteristischen Anwendungsfällen beträgt der Anteil von Selen 1 oder 2 Atomprozent, was im allgemeinen ausreicht, um die gewünschten Verbesserungen zu erzielen.

Wird Platin oder Selen den Seltenerd-Übergangsmetall-Legierungen hinzugefügt, so wird das Seltenerd/Übergangsmetall-Verhältnis wesentlich verändert. Es scheint so, als ob Platin in diesem System als ferromagnetisches Material wirkt. Wird Platin in einer üblichen Seltenerd-Übergangsmetall-Legierung ohne Berücksichtigung dieses Effektes hinzugefügt, so tritt ein Verlust in der Koerzitivkraft auf, wodurch die für die Informationsaufzeichnung maßgebenden Eigenschaften wesentlich verringert werden. Es muß dann Terbium hinzugefügt werden, um diesen Verlust an Koerzitivkraft zu kompensieren und die für die Aufzeichnung notwendigen Eigenschaften im bisherigen Umfang aufrechtzuerhalten. Dieser Einfluß von Platin bzw. Selen war nicht voraussehbar und wurde daher auch nicht erwartet. Im folgenden werden einige spezifische Zusammensetzungen von Aufzeichnungsschichten aus RETM-Legierungen nach der Erfindung näher beschrieben.

Wird von einer ternären Legierung aus $Tb_{22}Fe_{70}Co_8$ ausgegangen, so erfordert das Hinzufügen von 1 Atomprozent Platin einen Anstieg im Terbium-Anteil um 2 Atomprozent, um die Kompensationstemperatur nahe der Zimmertemperatur zu halten. Daraus ergibt sich eine Zusammensetzung $(Tb_{24}Fe_{68}Co_8)_{99}\ Pt_1$. Ein weiterer Anstieg des Platinanteils ergibt ein Auseinanderklaffen zwischen der verbesserten Stabilität der magnetooptischen Aufzeichnungsschicht und einem Absinken des Signal/Rausch-Verhältnisses. Abhängig von den Anforderungen an die Speichereigenschaften und der Betriebsumgebung kann ein erhöhter Anteil an Platin in der voranstehend erwähnten Legierung ohne weiteres erwünscht sein. Derartige Zusammensetzungen können beispielsweise $(Tb_{25}Fe_{67}Co_8)_{98}\ Pt_2$ und $(Tb_{27}Fe_{65}Co_8)_{97}\ Pt_3$ umfassen.

Ist das Ausgangsmaterial der RETM-Legierung eine quaternäre Legierung der Zusammensetzung GdTbFeCo, so werden ähnliche Effekte in bezug auf die Koerzitivkraft und das Signal/Rausch-Verhältnis beobachtet. Bei diesen quaternären Legierungen hat man durch die Einstellung des Verhältnisses Gd/Tb ein zusätzliches Mittel zur Hand, um die Schreibempfindlichkeit des magnetooptischen Aufzeichnungsmaterials zu steuern. Aus der Literaturstelle "IEEE Transactions of Magnetics" MAG-23 (1), Januar 1987, Seiten 165 bis 167, "Control of Parameters in Rare Earth-Transition Metal Alloys for Magneto-Optical Recording Media", Verfasser: M.H. Kryder et al., ist beschrieben, daß das Verhältnis Gd/Tb die Breite der Singularität der Koerzitivkraft in Abhängigkeit von der Temperatur in der Nähe des Kompensationspunktes beeinflußt. Somit ist es möglich, die Aufzeichnungsempfindlichkeit durch Erhöhen des Verhältnisses Gd/Tb zu steigern. Als Nachteil bringt die Möglichkeit der Einstellung der Empfindlichkeit wahrscheinlich eine erhöhte Kritikalität der Legierung in bezug auf das Verhältnis Seltenerden/Übergangsmetall und eine verringerte Stabilität in bezug auf die Temperatur mit sich.

Ebenso wie bei den ternären Legierungen muß der Anteil an Terbium gesteigert werden, um die Kompensation aufrechtzuerhalten. Ebenso wie bei den ternären Legierungen ist es möglich, größere Anteile an Platin hinzuzufügen, abhängig von den gestellten Anforderungen und der Betriebsumgebung. Einige bevorzugte Legierungszusammensetzungen sind $(Gd_{12}Tb_{12}Fe_{68}Co_8)_{99} Pt_1$, $(Gd_{12}Tb_{13}Fe_{67}Co_8)_{98} Pt_2$ und $(Gd_{13}Tb_{14}Fe_{65}Co_8)_{97} Pt_3$.

Wird den ternären Legierungen das Element Selen hinzugefügt, so ergeben sich u.a. folgende Legierungen $(Tb_{22}Fe_{70}Co_8)_{99} Se_1$, $(Tb_{22}Fe_{70}Co_8)_{98} Se_2$, $(Tb_{22}Fe_{70}Co_8)_{96} Se_4$ und $(Tb_{22}Fe_{70}Co_8)_{92} Se_8$.

Wird Selen quaternären Legierungen hinzugefügt, so werden u.a. folgende Legierungen erhalten: $(Gd_{11}Tb_{11}Fe_{70}Co_8)_{99}$ $Se_1$, $(Gd_{11}Tb_{11}Fe_{70}Co_8)_{98}$ $Se_2$, $(Gd_{11}Tb_{11}Fe_{70}Co_8)_{96}$ $Se_4$ und und $(Gd_{11}Tb_{11}Fe_{70}Co_8)_{92} Se_8$.

Der Einfluß der Veränderung des Kobaltanteils in quaternären und ternären Legierungen ist bekannt. Steigender Kobaltanteil erhöht die Curie-Temperatur und vergrößert den Kerr-Winkel. Dies bedeutet bei der vorliegenden Erfindung, daß bei ansteigendem Kobaltgehalt zu erwarten ist, daß das Signal/Rausch-Verhältnis sich erhöht. Jedoch steigert ein Hinzufügen von Kobalt zugleich auch die erforderliche Schreibleistung zum Einschreiben der Information, wobei die Schreibleistung einen begrenzenden Faktor für magnetooptische Aufzeichnungsmaterialien im Stand der Technik darstellt. Je höher die Schreibleistung der üblicherweise verwendeten Laserdioden wird, desto stärker kann der Kobaltanteil als eine mögliche Option zur Verbesserung der Eigenschaften von magnetooptischen Aufzeichnungsmaterialien erhöht werden.

Dieser Anstieg des Kobaltanteils kann durch einen Anstieg im Gd/Tb-Verhältnis begleitet werden, um die Schreibempfindlichkeit aufrechtzuerhalten. Eine dafür charakteristische Legierungszusammensetzung lautet $(Gd_{18}Tb_7Fe_{63}Co_{12})_{98}$ Pt2.

Die Träger für die magnetooptischen Aufzeichnungsmaterialien zur Herstellung von magnetooptischen Aufzeichnungsmedien nach der Erfindung sind auf dem Markt erhältliche, spritzgegossene Polykarbonatscheiben mit einem Durchmesser von 130 mm und einer Dicke von 1,2 mm. Derartige Träger werden sehr sorgfältig spritzgegossen, um die Doppelbrechung infolge der Spannungen in dem Material zu minimalisieren, und weisen im allgemeinen Spiralnuten mit einer ungefähren Tiefe von 70 nm bei einer Breite von 600 nm und einem Spurabstand von 1,6 $\mu$m auf. Die magnetooptische Schicht wird auf der mit Spuren versehenen Seite des Trägers aufgebracht, so daß die Platte durch den Träger hindurch optisch adressiert werden kann. Dadurch ist sichergestellt, daß es zu einer Defokussierung von Oberflächenstaub und kleinen Materialfehlern kommt. Zwei derartige Platten können Rücken an Rücken miteinander verbunden werden, um eine doppelseitige Platte zu erhalten. Für die Durchführung von Experimenten kann die magnetooptische Schicht auch auf einem sogenannten "Corning micro-cover slide", vergleichbar mit einem Deckglas für mikroskopische Untersuchungen, aufgebracht werden.

Bevor die Schicht auf dem Träger niedergeschlagen wird, wird die Feuchtigkeit aus dem Träger entfernt und dieser mit Hilfe eines neutralen Argonstrahles nach bekannten Techniken leicht angeätzt.

Die Seltenerd-Übergangsmetall-Legierung mit Platin oder Selen wird auf den Träger in einer herkömmlichen Magnetron-Sputtervorrichtung aufgestäubt. Es ist ebenso möglich, ein Vakuumdiffusionssystem zu verwenden, wie beispielsweise das System Balzers BAK 760, das für eine Magnetronzerstäubung und eine reaktive Magnetronzerstäubung modifiziert ist. Es kann mehr als eine Quelle zum Sputtern verwendet werden, was stets der Fall ist, wenn zusätzliche Schichten, wie beispielsweise dielektrische Schutzschichten, vor oder nach dem Aufsputtern der Seltenerd-Übergangsmetall-Legierung aufgestäubt werden. Für experimentelle Untersuchungen wird hierfür ein kreisförmiges horizontales Planetarium mit sechs Planeten in Kreisgestalt verwendet, bei dem eine Drehbewegung der einzelnen Trägerscheiben in den Planetenöffnungen erfolgt, während die Trägerscheiben in einer kreisförmigen Umlaufbahn über das oder die Targets geführt werden. Die Konfiguration ist derart, daß von den Targets aus nach oben hin gesputtert wird.

Für experimentelle Untersuchungen werden Proben angefertigt, die unterschiedlichen Anteile an Platin oder Selen enthalten, beim zusätzlichen Zerstäuben eines Fe-Targets mit Kobalt, Terbium und/oder Gadolinium, wobei Selen- und/oder Platinstreifen an der Oberfläche der Targets angebracht sind. Die Streifen sind beispielsweise quadratische Streifen mit 5 mm Kantenlänge und mit einer Dicke von 1 mm und werden durch eine Silberpaste an das Fe-Target angeklebt. Jeder Streifen enthält ein einziges Element, und ein Mosaik von Streifen wird vorgesehen, um die Legierungszusammensetzung zu verändern. Diese Mosaiktechnik ist nur für experimentelle Untersuchungen geeignet, während für ein In-line Produktionsverfahren ein homogenes Target der gewünschten Zusammensetzung verwendet wird. Bei einer bevorzugten Ausführungsform wird eine Schutzschicht aus Siliziumnitrid als erstes auf den Träger aufgesputtert und anschließend die magnetooptische Aufzeichnungsschicht aufgestäubt. Das Siliziumtarget ist ein 6 mm dickes Kreistarget aus Polysilizium, das mit Bor dotiert ist, um den hemmenden spezifischen Widerstand beim Sputtern zu verhindern. Beide Sputterquellen werden mit Gleichstrom betrieben.

Die Verfahren zum Herstellen von Seltenerd-Übergangsmetall-Aufzeichnungsschichten sind im Stand der Technik bekannt und werden hier nicht im einzelnen beschrieben. Die nachstehend diskutierten Betriebsbedingungen sind charakteristisch für den Stand der Technik.

Das Sputtern der magnetooptischen Schicht erfolgt bevorzugt in einer Argonatmosphäre bei einem Druck von $2 \times 10^{-3}$ mbar bis $24 \times 10^{-3}$ mbar. Die Leistung beim Sputtern liegt zwischen 400 und 600 Watt, wenn Schichten gesputtert werden, die Platin enthalten. Eine niedrige Leistung bis ungefähr 150 Watt wird angewandt, wenn Selen gesputtert wird, da Selen einen niedrigen Schmelzpunkt und niedere thermische Leitfähigkeit besitzt. Die übrigen Prozeßparameter bleiben im wesentlichen die gleichen. Eine magnetooptische Schicht von ungefähr 90 nm Dicke kann in etwa 8 Minuten aufgesputtert werden.

Wie schon zuvor erwähnt wurde, wird in bevorzugter Weise Siliziumnitrid vor und nach dem Aufsputtern der magnetooptischen Schicht auf dem Träger bzw. der magnetooptischen Schicht niedergeschlagen. Dieser Niederschlag wird durch reaktives Gleichstromsputtern von Silizium in einem Zerstäubungsgas aus Stickstoff und Argon bei einem Gesamtdruck von $2 \times 10^{-3}$ mbar bis $8 \times 10^{-3}$ mbar und einem Verhältnis des Stickstoff-Partialdruckes zum Gesamtdruck von 30 % bis 75 % vorgenommen. Die Leistung während des Zerstäubens beträgt ungefähr 600 Watt. Die Dicke der Siliziumnitridschicht liegt im Bereich von 800 bis 1000 Angström. Das Siliziumnitrid schafft eine optische Antireflexionskopplung, wodurch der effektive Kerr-Winkel der Polarisationsdrehung verbessert wird, sowie einen zusätzlichen Schutz gegen die atmosphärische Oxidation. Da beide Schichten die gleiche Dicke besitzen, kann die Aufzeichnung und das Auslesen entweder durch den Träger oder von der gegenüberliegenden Seite unter Verwendung einer Platte mit einem Glasfenster und einem Luftspalt erfolgen.

In Weiterbildung der Erfindung kann die der Atmosphäre zugewandte Schutzschicht aus einer zusammengesetzten Schicht bestehen, deren erstes Material an der Oberfläche, die der Atmosphäre zugewandt ist, ein nitridfreies Material, wie beispielsweise ein Oxid, ist, und die ein zweites Material umfaßt, das der Seltenerden-Übergangsmetallschicht zugewandt ist, bei dem es sich um ein nichtoxidisches Material, bevorzugt ein Nitrid, wie Siliziumnitrid oder Aluminiumnitrid, handelt. In einer Ausführungsform der Erfindung umfaßt die Schutzschicht eine SiN- oder AlN-Schicht nächst der Aufzeichnungsschicht, und eine Schicht aus $Al_2O_3$ nächst der äußeren Oberfläche. In einer weiteren Ausführungsform der Erfindung ändert sich die Zusammensetzung der Schutzschicht graduell von reinem SiN oder AlN kontinuierlich zu der aktiven magnetooptischen Schicht hin, an der gegenüberliegenden, äußeren Seite der Grenzschicht befindet sich reines $Al_2O_3$. Weitere Einzelheiten der Zusammensetzung solcher Schichten sind in der US-Patentanmeldung, S.N. 790,497, eingereicht am 23. Oktober 1985, beschrieben.

Die erfindungsgemäßen Medien haben ein Signal/Rausch-Verhältnis (C/R) von besser als 55 dB für eine 30 kHz Bandbreite und ein Trägersignal von 0,5 MHz, wenn sie durch den Träger hindurch in herkömmlicher Weise geprüft werden, oder besser als 58 dB, wenn sie durch eine Platte mit Glasfenster und Luftspalt hindurch geprüft werden. Die Platten haben eine Standzeit von mehr als 500 Stunden in einer Klimakammer bei 65 °C und 85 % relativer Luftfeuchtigkeit, ohne Änderung im Signal/Rausch-Verhältnis oder der Wiedergabeempfindlichkeit.

Die auf den 'Corning micro-cover' Läufern niedergeschlagenen magnetooptischen Schichten wurden in einer Klimakammer geprüft. Diese Läufer hatten eine 1000 Angström dicke magnetooptische Schicht, die auf einer 300 Angström dicken Siliziumnitridschicht niedergeschlagen war. Sie wurden wiederholt auf Änderungen unter Verwendung eines Densitometers gemessen. Die Meßpunkte wurden in Bereichen ausgewählt, die keine großen Nadellöcher aufweisen, um den Einfluß des durch die Nadellöcher durchgelassenen Lichtes auf die Messungen zu eliminieren. Insofern geben die Meßpunkte nur die Änderungen der zusammenhängenden Schichten wieder. Alle Meßpunkte sind Durchschnittswerte von 10 Ablesungen. Die Temperatur und die relative Feuchtigkeit wurden auf 65 °C und 80 % festgelegt. Die Ergebnisse der optischen Dichtemessungen sind in der nachstehenden Tabelle zusammengefaßt:

| % Platin Zeit | O | 1 Stunde | 12 Std. | 34 Std. | 132 Std. |
|---|---|---|---|---|---|
| 0 | 3,23 | 2,94 | 2,98 | 2,99 | 2,98 |
| 1 | 3,45 | 3,29 | 3,31 | 3,17 | 3,20 |
| 2 | 3,42 | 3,37 | 3,34 | 3,27 | 3,26 |
| 3 | 3,35 | 3,29 | 3,29 | 3,22 | 3,20 |

Die Schicht ohne Platinanteil enthält viele Korrosionsbereiche. Diese sind typischerweise an der Kante des Läufers ausgebildet und wachsen nach innen hin an. Nur einige dieser Korrosionsbereiche beginnen in größerer Entfernung von der Kante. Schmale Risse von etwa 1 mm traten auf Teilen der Schicht auf dem Läufer auf.

Die magnetooptische Schicht mit 1 Atomprozent Platin hat wesentlich weniger Nadellöcher, jedoch war die Rißbildung stärker ausgeprägt.

Die magnetooptische Schicht mit 2 Atomprozent Platinanteil war ähnlich der Schicht mit 1 Atomprozent Platinanteil, wobei jedoch die Fehlstellen im wesentlichen an der Kante der Probe auftraten.

Die magnetooptische Schicht mit 3 Atomprozent Platinanteil hatte nur einige wenige Nadellöcher, jedoch begann sich das Signal/Rausch-Verhältnis der Schicht zu verschlechtern.

Für den Fachmann ist es selbstverständlich, daß verschiedene Änderungen bei dem voranstehend beschriebenen Verfahren vorgenommen werden können, ohne daß von dem Erfindungsgedanken abgewichen wird. Beispielsweise wird unter Produktionsbedingungen ein In-line Sputtersystem eingesetzt. Wie voranstehend erwähnt wurde, wird dann ein homogenes Target mit der gewünschten Zusammensetzung der einzelnen Elemente verwendet. Hierbei kann auch die Zusammensetzung der niedergeschlagenen Schicht geringfügig geregelt werden, indem die elektrische Vorspannung des Trägers geregelt oder der Zerstäubungsdruck variiert wird.

**Patentansprüche**

1. Amorphes magnetooptisches Aufzeichnungsmaterial mit einer leicht zu magnetisierenden Achse senkrecht zur Materialoberfläche, aus einer Seltenerd-Übergangsmetall-Legierung mit Fe, Co und zumindest einem Element aus der Gruppe Tb, Gd sowie einem weiteren Metall, dadurch gekennzeichnet, daß die Seltenerd-Übergangsmetall-Legierung die Zusammensetzung

$$((Tb\ Gd)_x\ Fe_{100-x-y}\ Co_y)_{100-a}\ Pt_a$$

für das weitere Metall Platin und

$$((Tb\ Gd)_x\ Fe_{100-x-y}\ Co_y)_{100-b}\ Se_b$$

für das weitere Metall Selen aufweist, mit $0,7 \leqq a \leqq 3$, $1 \leqq b \leqq 5$, $22 \leqq x \leqq 27$ und $6 \leqq y \leqq 10$.

2. Amorphes magnetooptisches Aufzeichnungsmaterial nach Anspruch 1, dadurch gekennzeichnet, daß der Anteil von Platin oder Seien 1 Atomprozent beträgt.

3. Amorphes magnetooptisches Aufzeichnungsmaterial nach Anspruch 1, dadurch gekennzeichnet, daß der Anteil von Seien 1 bis 3 Atomprozent beträgt.

4. Amorphes magnetooptisches Aufzeichnungsmaterial nach Anspruch 1, dadurch gekennzeichnet, daß die Seltenerden-Übergangsmetall-Legierung aus GdFeCo besteht.

EP 0 316 615 B1

**5.** Amorphes magnetooptisches Aufzeichnungsmaterial nach Anspruch 1, dadurch gekennzeichnet, daß die Seltenerden-Übergangsmetall-Legierung aus TbFeCo besteht.

**6.** Amorphes magnetooptisches Aufzeichnungsmaterial nach Anspruch 1, dadurch gekennzeichnet, daß die Seltenerden-Übergangsmetall-Legierung aus TbGdFeCo besteht.

**7.** Amorphes magnetooptisches Aufzeichnungsmaterial nach Anspruch 1, dadurch gekennzeichnet, daß die Seltenerden-Übergangsmetall-Legierung die Zusammensetzung

$(Tb_{24}\ Fe_{68}\ Co_8)_{99}\ Pt_1$

hat.

**8.** Amorphes magnetooptisches Aufzeichnungsmaterial nach Anspruch 1, dadurch gekennzeichnet, daß die Seltenerden-Übergangsmetall-Legierung gemäß der Formel

$(Gd_{12}\ Tb_{12}\ Fe_{68}\ Co_8)_{99}\ Pt_1$

zusammengesetzt ist.

**9.** Amorphes magnetooptisches Aufzeichnungsmaterial nach Anspruch 1, dadurch gekennzeichnet, daß die Seltenerden-Übergangsmetall-Legierung die Zusammensetzung

$(Tb_{22}\ Fe_{70}\ Co_8)_{99}\ Se_1$

hat.

**10.** Amorphes magnetooptisches Aufzeichnungsmaterial nach Anspruch 1, dadurch gekennzeichnet, daß die Seltenerden-Übergangsmetall-Legierung gemäß der Formel

$(Gd_{11}\ Tb_{11}\ Fe_{70}\ Co_8)_{99}\ Se_1$

zusammengesetzt ist.

**11.** Amorphes magnetooptisches Aufzeichnungsmaterial nach Anspruch 1, dadurch gekennzeichnet, daß die beiden Seiten des Materials aus einer Seltenerden-Übergangsmetall-Legierung von Siliziumnitridschichten eingeschlossen sind.

**12.** Amorphes magnetooptisches Aufzeichnungsmaterial nach Anspruch 11, dadurch gekennzeichnet, daß die beiden Siliziumnitridschichten gleiche Dicke besitzen.

**Claims**

**1.** Amorphous magnetooptical recording material having an easily magnetisable axis perpendicular to the surface of the material and composed of a rare-earth/transition-metal alloy containing Fe, Co and at least one element from the group comprising Tb, Gd and one further metal, characterised in that the rare-earth/transition-metal alloy has the composition

$((Tb\ Gd)_x\ Fe_{100-x-y}\ Co_y)_{100-a}\ Pt_a$

for the further metal platinum and

$((Tb\ Gd)_x\ Fe_{100-x-y}\ Co_y)_{100-b}\ Se_b$

for the further metal selenium, where $0.7 \leq a \leq 3$, $1 \leq b \leq 5$, $22 \leq x \leq 27$ and $6 \leq y \leq 10$.

**2.** Amorphous magnetooptical recording material according to Claim 1, characterised in that the platinum or selenium component is 1 atomic per cent.

7

**3.** Amorphous magnetooptical recording material according to Claim 1, characterised in that the selenium component is 1 to 3 atomic per cent.

**4.** Amorphous magnetooptical recording material according to Claim 1, characterised in that the rare-earth/transition-metal alloy is composed of GdFeCo.

**5.** Amorphous magnetooptical recording material according to Claim 1, characterised in that the rare-earth/transition-metal alloy is composed of TbFeCo.

**6.** Amorphous magnetooptical recording material according to Claim 1, characterised in that the rare-earth/transition-metal alloy is composed of TbGdFeCo.

**7.** Amorphous magnetooptical recording material according to Claim 1, characterised in that the rare-earth/transition-metal alloy has the composition

$(Tb_{24} Fe_{68} Co_8)_{99} Pt_1$.

**8.** Amorphous magnetooptical recording material according to Claim 1, characterised in that the rare-earth/transition-metal alloy has a composition in accordance with the formula

$Gd_{12} Tb_{12} Fe_{68} Co_8)_{99} Pt_1$.

**9.** Amorphous magnetooptical recording material according to Claim 1, characterised in that the rare-earth/transition-metal alloy has the composition

$(Tb_{22} Fe_{70} Co_8)_{99} Se_1$.

**10.** Amorphous magnetooptical recording material according to Claim 1, characterised in that the rare-earth/transition-metal alloy has a composition in accordance with the formula

$(Gd_{11} Tb_{11} Fe_{70} Co_8)_{99} Se_1$.

**11.** Amorphous magnetooptical recording material according to Claim 1, characterised in that the two sides of the material composed of a rare-earth/transition-metal alloy are enclosed by silicon nitride layers.

**12.** Amorphous magnetooptical recording material according to Claim 11, characterised in that the two silicon nitride layers have the same thickness.

**Revendications**

**1.** Matériau d'enregistrement magnéto-optique amorphe comportant un axe d'aimantation facile perpendiculaire à sa surface, et constitué par un alliage métal de transition-terre rare comportant au Fe, Co et au moins un élément tiré du groupe Tb, Gd, ainsi qu'un autre métal, caractérisé en ce que l'alliage métal de transition-terre rare possède la composition

$((Tb\ Gd)_x Fe_{100-x-y} Co_y)_{100-a} Pt_a$

lorsque l'autre métal est le platine, et la composition

$((Tb\ Gd)_x Fe_{100-x-y} Co_y)_{100-b} Se_b$

lorsque l'autre métal est le sélénium, avec $0{,}7 \leq a \leq 3$, $1 \leq b \leq 5$, $22 \leq x \leq 27$ et $6 \leq y \leq 10$.

**2.** Matériau d'enregistrement magnéto-optique amorphe selon la revendication 1, caractérisé en ce que le pourcentage de platine ou de sélénium est égal à 1 % d'atomes.

**3.** Matériau d'enregistrement magnéto-optique amorphe selon la revendication 1, caractérisé en ce que le pourcentage de sélénium est compris entre 1 et 3 % d'atomes.

**4.** Matériau d'enregistrement magnéto-optique amorphe selon la revendication 1, caractérisé en ce que l'alliage métal de transition-terres rares est formé de GdFeCo.

**5.** Matériau d'enregistrement magnéto-optique amorphe selon la revendication 1, caractérisé en ce que l'alliage métal de transition-terres rares est constitué de TbFeCo.

**6.** Matériau d'enregistrement magnéto-optique amorphe selon la revendication 1, caractérisé en ce que l'alliage métal de transition-terres rares est constitué de TbGdFeCo.

**7.** Matériau d'enregistrement magnéto-optique amorphe selon la revendication 1, caractérisé en ce que l'alliage métal de transition-terres rares possède la composition

$(Tb_{24} \ Fe_{68} \ Co_8)_{99} \ Pt_1$ .

**8.** Matériau d'enregistrement magnéto-optique amorphe selon la revendication 1, caractérisé en ce que l'alliage métal de transition-terres rares possède une composition correspondant à la formule

$(Gd_{12} \ Tb_{12} \ Fe_{68} \ Co_8)_{99} \ Pt_1$ .

**9.** Matériau d'enregistrement magnéto-optique amorphe selon la revendication 1, caractérisé en ce que l'alliage métal de transition-terres rares possède la composition

$(Tb_{22} \ Fe_{70} \ Co_8)_{99} \ Se_1$ .

**10.** Matériau d'enregistrement magnéto-optique amorphe selon la revendication 1, caractérisé en ce que l'alliage métal de transition-terres rares possède une composition correspondant à la formule

$(Gd_{11} \ Tb_{11} \ Fe_{70} \ Co_8)_{99} \ Se_1$ .

**11.** Matériau d'enregistrement magnéto-optique amorphe selon la revendication 1, caractérisé en ce que les deux faces du matériau constitué par un alliage métal de transition-terres rares sont enserrées dans des couches de nitrure de silicium.

**12.** Matériau d'enregistrement magnéto-optique amorphe selon la revendication 11, caractérisé en ce que les deux couches de nitrure de silicium possèdent la même épaisseur.